# EUROPEAN PATENT SPECIFICATION

(11) **EP 1 900 546 B1**
(45) Date of publication and mention of the grant of the patent: **05.05.2010**
(21) Application number: 07115402.5
(22) Date of filing: 31.08.2007
(51) Int. Cl.: B60B 17/00

(54) **Seamless rolled railway wheel**
Nahtloses Eisenbahnrad
Roue ferroviaire laminée sans soudure

(30) Priority: 13.09.2006 UA 2006009822
(43) Date of publication of application: 19.03.2008
(73) Proprietor: Open Joint Stock Company "Interpipe Nizhnedneprovsky Tube Rolling Plant", 49081 Dnipropetrovsk (UA)
(72) Inventor: Kopaev, Yevgen, 49078, Dnipropetrovsk (UA); Roslik, Oleksandr, 49128, Dnipropetrovsk (UA); Korzh, Dmitro, 49038, Dnipropetrovsk (UA); Chuprina, Lubov, 49051, Dnipropetrovsk (UA); Yarovoy, Volodimir, 49087, Dnipropetrovsk (UA); Tkachenko, Volodimir, 49000, Dnipropetrovsk (UA)
(74) Representative: Kastel, Stefan

(56) References cited:
- EP-A- 0 416 103
- EP-A- 1 225 065
- WO-A-03/064182
- DE-A1- 2 320 726
- DE-A1- 3 117 572
- DE-B1- 2 331 738
- FR-A- 2 717 122
- RU-A- 2004 100 876

## Description

### Technical Field

This invention relates to the area of manufacturing disk wheels for railway vehicles with disks being integral with rim and having rail-engaging elements.

### Background of the invention

Recently conditions of rolling stock exploitation have changed essentially. These changes were caused by the growth of movement speed and increase of load up to 30 tons per axis.

In the process of their operation seamless rolled railway wheels are exposed to the wide range of factors among which both outward loads of the railway track and rolling stock elements as well as temperature stresses appeared in the wheel while braking process. The resulted factual stresses define greatly wheel resistance to fracture and damages and wheel service life, in whole.

One of the major factors affecting seamless rolled railway wheel service life is values of total internal stresses caused by wheel exploitation as well as character of stress distribution into the wheel volume.

Occurrence of considerable magnitudes of the value of total internal stresses in seamless rolled railway wheel is the result of combined influences both of normal static and sign-variable dynamic loadings acting in radial and axial directions and temperature stresses caused by friction between braking shoes and rim while rolling stock braking.

In case when magnitudes of the values of total stresses are close to or more than fatigue life limit of the wheel material over a long period of time, fatigue cracks are formed in the wheel that may result in premature fracture of the wheel.

When seamless rolled railway wheel is under unfavourable load conditions, concentration of stresses caused by external loads and temperature are occurred in it. In this case total value of inner stresses may be higher than fluidity limit of the material of which the wheel is made and residual deformations appear. They change wheel operational properties which may reduce wheel service life.

Seamless rolled railway wheels exploitation practice shows that in the majority of cases wheel malfunctioning resulted from disk fractures is caused by significant fatigue stresses. As a rule, wheel is fractured in the place of disk conjugation with rim.

The traditional way of reducing total inner stresses and their optimum distributing into the wheel volume is choosing a rational seamless rolled railway disk structure as well as mutual arranging of its elements.

Seamless rolled railway wheels comprising a rim, a hub and a disk formed by outward and inner surfaces are known in the art (RU 2085403 C1

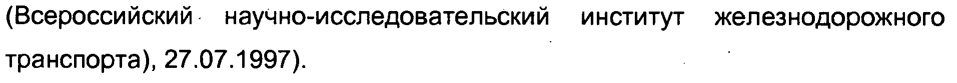

Outward and inner surfaces of the conventional seamless rolled railway wheel which form the wheel disk are designed straight linear and inclined to the wheel axis to the wheel axis at 71 - 75 degrees.

Disadvantages of the conventional seamless rolled railway wheel are uneven distribution of total inner stresses into the wheel volume, significant axial movement of the rim relative to the hub that result in the reduction of the wheel service life. These disadvantages are caused by high magnitudes of values of inner stresses at inner surface of the disk in the place of its conjugation with the rim developed by the external loadings and high magnitudes of internal stresses at outward surface of the disk in the place of its conjugation with the hub resulted from braking shoes friction along the wheel rim while braking process and from the side pressure on the wheel edge when rolling stock passes curved sections of railway track. The known seamless rolled railway wheel according to DE 23 31 738 B1 (KLOECKNER-WERKE AG, 41000 DUISBURG), 08.08.1974, comprises a rim, a hub and a disk which is formed by outboard and inboard curved surfaces:

The disk thickness of the known seamless rolled railway wheel is evenly decreased from hub to rim on all of width to the minimum thickness, and the regions of protuberant bend of the wheeled disk, passing between the arcs of opposite curvature, pass on connecting these arcs of tangent on length minimum 5 mm.

Disadvantage of the known seamless rolled railway wheel is unstable rigidity in radial and axial directions. This disadvantage is caused by uneven distribution of total inner stresses into the wheel volume that depend on direct of load action.

The known seamless rolled railway wheel according to FR 2 717 122 (SARDOU MAX (FR)), 15.09.19952, comprises a rim, a hub and a disk which is formed by outboard and inboard curved surfaces.

The central line of axial disk section in the place of the known wheel conjugation with the rim coincides with the central line of axial disk section in the place of the known wheel conjugation with the hub.

Disadvantages of the known wheel are uneven distribution of total values of inner stresses over the wheel volume and high magnitude of axial wheel rim shift. These disadvantages are caused by high magnitudes of inner stresses at inboard surfaces of the central wheel section resulted from external loadings caused by heating while braking process or when rolling stock is passing curved sections of railway track (when side loads on the wheel edge are high). Reduction of wheel service life is the result of the mentioned above disadvantages.

The known seamless rolled railway wheel according to EP 1 225 065 (CONSTRUCCIONES Y AUX DE FERROC (ES)), 24.07.2002, comprises a rim, a hub and a disk which is formed by outboard and inboard curved surfaces.

In the known wheel the plane of outward face of the rim is approximately tangential to the point of the greatest curving of the outward curved surface of the disk, and the central line of the radial section of said disk in the place of its conjugation with said rim is shifted along the wheel axis in relation to a central line of the axial disk section toward said outboard curved surface and coincides with the central line of axial disk section in the place of the known wheel conjugation with the hub.

Disadvantage of the known wheel is low radial rigidity conditioned by high magnitude of curving in the centre of the wheel disk that result in significant temperature stresses in the inboard surface of the central part of the wheel disk.

Except for it, in the known wheel there are considerable axial displacements of rim of wheel in the case of the united action of the side loads on the wheel edge of wheel and vertical loads the action of which is displaced toward a comb, that in turn leads considerable inner stresses in the place of disk conjugation with the rim. This disadvantage is caused by adding up of tensions, arising up from the action of bending moment, which arises up at displacement of point of appendix of the vertical loads in relation to the central line of axial section of disk in the place of its conjugation with the rim toward the inboard surface of wheel, and moment from the action of the external loads on comb of wheel at passing curved sections of railway track (when side loads on the wheel edge are high).

The known seamless rolled railway wheel according to SU 1139647 A1 (VEB Radzatsfabrik Ilsenburg), 15.02.1985 consists of a rim, a hub and a disk which is formed by outward and inner curved surfaces.

The central line of the axial disk section in the place of the known wheel conjugation with the rim coincides with the central line of the axial disk section in the place of the known wheel conjugation with the hub.

The described above wheel structure allows to reduce magnitudes of stresses appeared in the place of the wheel conjugation with the rim as compared to the conventional wheel design.

Disadvantages of the known wheel are uneven distribution of total values of inner stresses into the wheel volume and high magnitude of axial wheel rim shift. These disadvantages are caused by high magnitudes of inner stresses at inner surfaces of the central wheel section resulted from external loadings caused by heating while braking process or when rolling stock is passing curved sections of railway track (when side loads on the wheel edge are high). Reduction of wheel service life is the result of the mentioned above disadvantages.

To reach the most preferable technical results and essential features of the wheel seamless rolled railway wheels comprising a rim and a hub conjugated with a disk by curved transitional regions are known in the art. The known disk is formed by outward and inner curved surfaces which are made so that the outward curved disk surface from the rim side is formed by a first outward radius curvature (R1) and by a second outward radius curvature (R2) from the hub side with the curving that coincides with the direction of said first radius curvature (R1) and connected with each other a third outward radius curvature (R3) with curving opposite to the direction of said first radius curvature (R1) and said second outward curvature (R2). The inner curved surface of the disk from the side of the hub is formed by a first inner radius curvature (R4) and a second inner radius curvature (R5) from the side of hub with curving that coincides with said first inner radius curvature direction and connected with each other a third inner radius curvature (R6) with curving opposite to curving of said first inner curvature (R4) and said second inner curvature (R5). (RU 2259279 C1 (OAO Vyksunsky

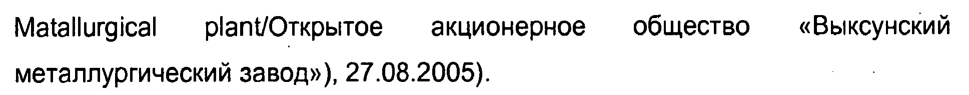

Shift of the central line of the axial disk section in the place of the known wheel disk conjugation with the rim in relation to the central line of the axial disk section in the place of its conjugation with the hub is within a range of 10 - 25 mm.

The described above structure of seamless rolled railway wheel allows to reduce magnitudes of inner stress at inner surface of the central part of the disk as well as to decrease the magnitude of axial wheel rim shift while heating during braking processes or when rolling stock passes the curved sections of railway track as compared to prior wheel structures.

However, a disadvantage of the known and described above wheel is uneven distribution of total inner stresses into the wheel volume. This disadvantage is caused by high magnitude of curving in the centre of the wheel disk that result in significant temperature stresses in the inner surface of the central part of the wheel disk that can develop fatigue cracks and reduce the wheel service life.

### Summary of the invention

Accordingly, the object of this invention is to provide a structure of seamless rolled railway wheel, the use of which will provide the decrease of total values of inner stresses due to their optimum distributing into the wheel volume, whereby the wheel service life will be increased.

This objective may be accomplished with a seamless rolled railway wheel comprising a rim and a hub conjugated with a disk by curved transitional regions, wherein the disk is formed by outward and inner surfaces arranged in such a way that the outward curved disk surface is formed by a first outward radius curvature (R1) from the side of the rim and by a second outward curvature (R2) from the side of the hub with curving which coincides with the curving direction of said first outward radius curvature (R1), and conjugated with each other a third outward radius curvature (R3) with the curving opposite to the curving direction of said first outward curvature (R1) and said second outward curvature (R2). The inner curved surface of the disk is formed by a first inner radius curvature (R4), a second inner radius curvature (R5) from the side of the hub with the curving, which coincides with the curvature direction of said first inner radius curvature (R4), and conjugated with each other a third inner radius curvature (R6) with the curving opposite to the curving direction of said first inner curvature (R4) and said second inner curvature (R5). According to the invention, for the external curved surface: radius of said first outward radius curvature (R1) is from 0.09 to 0.14 of the rolling circle diameter D, radius of said second outward radius curvature (R2) is from 0.1 to 0.15 of the rolling circle diameter D, radius of said third outward radius curvature (R3) is from 0.12 to 0.18 of the rolling circle diameter D, for the inner curved surface: radius of said first inner radius curvature (R4) is from 0.12 to 0.18 of the rolling circle diameter D, radius of said second inner radius curvature (R5) is from 0.1 to 0.15 of the rolling circle diameter D, radius of said third inner radius curvature (R6) is from 0.12 to 0.17 of the rolling circle diameter D.

Thereby, the seamless rolled railway wheel disk is manufactured in the way, where radius of the first outward radius curvature (R1) is from 0.09 to 0.14 of the rolling circle diameter D, radius of the second outward radius curvature (R2) is from 0.1 to 0.15 of the rolling circle diameter D, radius of the third outward radius curvature (R3) is from 0.12 to 0.18 of the rolling circle diameter D for the external curved surface; radius of the first inner radius curvature (R4) is from 0.12 to 0.18 of the rolling circle diameter D, radius of the second inner radius curvature (R5) is from 0.1 to 0.15 of the rolling circle diameter D, radius of the third inner radius curvature (R6) is from 0.12 to 0.17 of the rolling circle diameter D for the inner curved surface. This way is considered to be preferable and optimal as it provides the decrease of magnitudes of the values of stresses caused by external loadings in the places of the disk conjugating with the hub and the rim and finally, it provides even distribution of stresses in the wheel and decrease of their total values.

Increase of the radii of the first outward radius curvature (R1) and the first inner radius curvature (R4) brings to the necessity to increase the radii of the conjugated with them the third outward radius curvature (R3) and the third inner radius curvature (R6), that in its turn, leads to radii increase of the second outward radius curvature (R2) and the second inner radius curvature (R5). Otherwise, if there is no change in radii of the conjugated radius curvatures, the change in the arrangement of the main wheel structure elements in respect to each other will take place.

The described above structure of the seamless rolled railway wheel approaches to the vertical rectangular form of the wheel disk that leads to the decrease of the wheel rigidity in axial direction and the increase of the magnitude of values of the inner wheel disk stresses caused by side loads.

In its turn, the decrease of the radii of the first outward radius curvature (R1) and the first inner radius curvature (R4) causes the necessity to decrease the radii of the conjugated with them the third outward radius curvature (R3) and the third inner radius curvature (R6) that result in need to decrease the radii of the second outward radius curvature (R2) and the second inner curvature (R5).

Designated arrangement of the seamless rolled railway wheel results in the higher wheel curving in the central portion of the disk, that in its turn, provides the increase of magnitudes of total values of inner stresses at the inner surface of the wheel disk caused by the affects of the side loads on the wheel and their concentration in the place of the highest curving of the disk.

The applied for patent set of features allows to decrease the affects of total inner stresses in the wheel, in general, that diminishes the probability of fatigue cracking in the portions of seamless rolled railway wheel which are under high loads. The results are high operational strength and reliability of the seamless rolled railway wheel structure and therefore, increase of the wheel service life.

### Brief Description of the Drawings

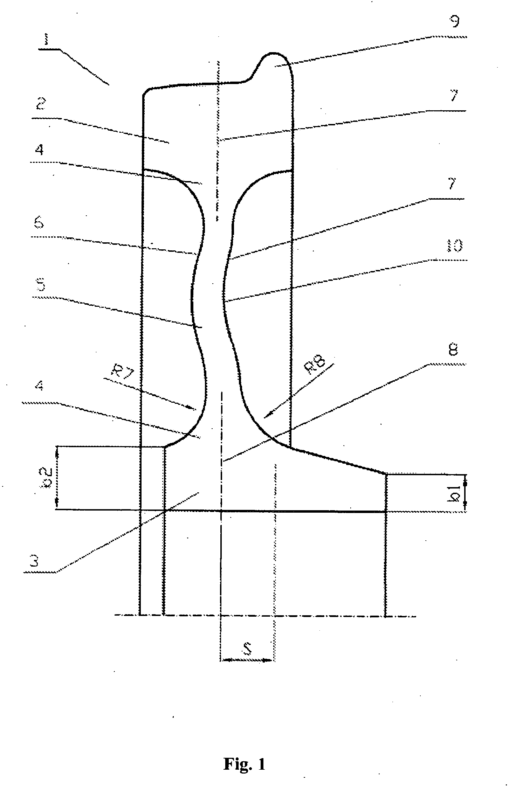

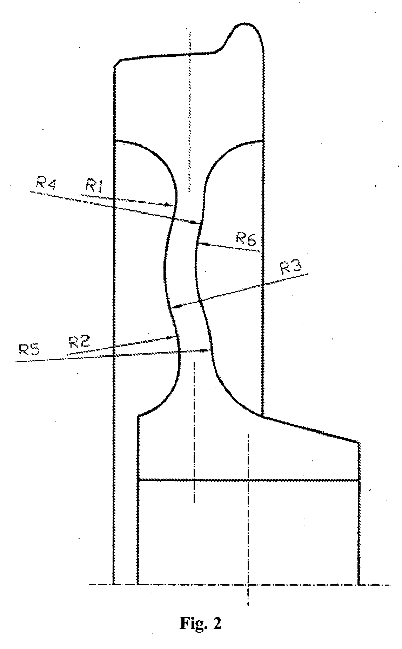

The invention will be described in further detail below reference being made to the accompanying drawings thereof, in which Fig.1 is a cross-sectional view of the seamless rolled railway wheel; Fig. 2 shows a cross-sectional view of the seamless rolled railway wheel (the scheme of radius curvatures arrangement).

### Detailed Description of the Preferred Embodiment

A seamless rolled railway wheel (Fig. 1 - 2) comprises a rim 2 (Fig. 1) and a hub 3 conjugated by curved transitional regions 4 with a disk 5 formed by outward 6 and inner 7 curved surfaces. The outward curved surface 6 of the disk 5 is formed by a first outward radius curvature R1 (Fig. 2) from the side of the rim 2 and by a second outward radius curvature R2 (Fig. 2) from the side of the hub 3 with the curving coinciding with the direction of said first radius curvature R1 curving and conjugating with each other a third outward radius curvature R3 with the curving opposite to the direction of the first outward radius curvature R1 curving and the second outward radius curvature R2. The inner curved surface 7 (Fig. 1) of the disk 5 is formed by a first inner radius curvature R4 (Fig. 2) from the side of the rim 2 and by a second inner radius curvature R 5 (Fig.2) from the side of the hub with the curving coinciding with the direction of the first inner curvature R 4 curving and conjugating with each other the third inner radius curvature R6 with the curving opposite to the direction of the first inner radius curvature R4 curving and the second inner radius curvature R5.
For the outward curved surface 6 (Fig. 1): the radius of the first outward radius curvature R1 (Fig. 2) is from 0.09 to 0.14 of the wheel rolling circle diameter D, radius of the second outward radius curvature R2 is from 0.01 to 0.15 of the wheel rolling circle diameter D, radius of the third outward radius curvature R3 is from 0.12 to 0.18 of the wheel rolling circle diameter D. For the inner curved surface 7 (Fig. 1): radius of the first radius curvature R4 (Fig. 2) is from 0.12 to 0.18 of the wheel rolling circle diameter D, radius of the second inner radius curvature R5 is from 0.1 to 0.15 of the wheel rolling circle diameter D, radius of the third inner radius curvature R6 is from 0.12 to 0.17 of the wheel rolling circle diameter D.

The central line 8 (Fig. 1) of the disk 5 axial section is shifted in the place of its conjugation with the hub 3 from the hub's middle at a distance S which is 35 - 55 mm.

The transitional region 4 in the place of conjugation of the outward curved surface 6 of the disk 5 with the hub 3 of the wheel 1 is made with the radius R7, which is equal to 0.3 - 0.9 of the radius R8 in the place of conjugation of the inner curved surface 7 of the disk 5 with the hub 3 in its internal side (R7 = (0.3 - 0.9) R8).

Height b1 of the hub 3 in the internal side of the wheel is 0.5 - 0.9 of the height b2 of the hub 3 at the external side of the wheel (b1 = (0.5 - 0.9) b2).

Diameter D (Fig. 2) of the seamless rolled railway wheel rolling circle is 920 - 1020 mm.

The operation of the applied seamless rolled railway wheel is described below.

When the wheel 1 is rolling on the rail (not pointed in the figures) the load of the vertical force appeared in the plane of the rolling circle is transferred to the disk 5 and the hub 3 through the rim 2. As the result of kinematics oscillations, especially, when the rolling stock is moving along the curved regions of the railway track, the load of the lateral pressure from the edge 9 of the rim 2 of the wheel 1 on the rail appears. This load is also transferred to the disk 5 of the wheel 1.

The maximum value of the dynamics loads on the wheel of a rolling stock with an axial load up to 30 tons are twice as high as maximum static load and, as a rule, are not higher than 300 kN for the vertical load and 147 kN for the lateral load. Moreover, the maximum magnitude of the values of total inner stresses in the wheel should not exceed wheel material fluidity limit which is 800 MPa.

There are three stressed zones in the applied for patent seamless rolled railway wheel: transitional regions 4 in the place of the disk 5 conjugation with the rim 2 and in the place of the disk 5 conjugation with the hub 3, and in the middle of the disk 5 in the point 10, where the values of curving are the highest.

The vertical load causes the compressive stresses in the wheel, which reach their maximum value in the place of the disk 5 conjugation with the rim 2 and in the point 10 of the highest curving of the inner surface 7 of the disk 5. The values of stresses in these points are not higher than 100 MPa that is much lower admitted magnitudes.

In the same time the lateral load appeared while rolling stock is passing the curved regions of railway track in combination with the maintained vertical load causes bending moment in the disk 5 of the wheel 1 rising from the rim 2 to the hub 3 of the wheel 1.

The most stressed portion of the wheel 1 appeared as the result of the combined affects of vertical and lateral loads is a place of the disk 5 conjugation with the hub 3, where there is a hoop stress at the external side of the disk 5 and a compressive stress at the internal side of the disk.

In this case the magnitudes of the values of maximum stresses do not exceed 400 MPa.

Besides, while continuous braking process of rolling stock significant temperature stresses appear in the wheel. These temperature stresses are caused by intensive heat discharge when brake shoes are in contact with the rim 2 of the wheel 1 (not pointed in the figures).

In this case, the highest magnitudes of values of the stresses appeared in the point 10 of the highest curving of the disk 5 and at the outward curved surface 6 of the disk 5 in the place of its conjugation with the hub 3 do not exceed 560 kN if there are no external loadings on the wheel. This is much lower admitted magnitudes.

When vertical loadings are applied to the wheel 1, mutual compensation of temperature stresses and the stresses caused by the applied external forces are observed in the majority of wheel regions. This compensation is explained by the fact that in general, external forces cause compressive stresses, which are compensated by the hoop temperature stresses.

In case of the combined affects of the vertical and lateral loads on the wheel 1, from the one hand, and temperature stresses, from the other, maximum stresses appear at the outward curved surface 6 in the place of the disk 5 conjugation with the hub 3, the values of which are close to the admitted stress magnitudes. The high stress concentration in this place is explained by the fact that hoop temperature stresses in this place are the highest and are added to the hoop stresses appeared in this place developed by lateral load applied to the wheel.

Radial manufacture of the place of conjugation of the outward curved surface 6 of the disk 5 with the hub 3 with the radius R7, which is lower than radius R8 in the place of conjugation of the inner curved surface 7 of the disk 5 with the hub 3, allows to decrease stress concentration caused by temperature stresses due to their even distribution into this portion of the outward curved surface 6.

In its turn, manufacture of the hub 3 with the height b2 at the external side of the wheel 1, which is higher than the height b1 of the hub 3 at the internal side, allows to decrease magnitude of value of the stresses caused by the lateral load, that also influences positively the stressed state of the wheel 1 in the place of disk 5 transition into the hub 3.

The results of the research show that the stressed state of the wheel 1 in the places of the disk 5 transition into the rim 2 and the hub 3 and in the point 10 of the highest curving of the inner curved surface 7 do not exceed the critical value of 800 MPa (wheel material fluidity limit).

Having thus described in detail a preferred embodiment of the present invention, it will be apparent to those skilled in the art that the described structure of the wheel provides both the even distribution of stresses into the whole wheel volume and the reduction of the stresses in the wheel portions of high load, therefore, decreasing the possible wheel fatigue cracking that will result in wheel service life increase.

Besides, use of the wheel structure applied for patent allows increasing damping properties which result in high wheel operational properties and railway vehicle movement safety.

The applied for patent seamless rolled railway wheel can be manufactured commercially with the use of standard equipment. The highest cost economy can be reached when using the applied wheel in the structures of high speed passenger and freight cars with the increased load on axis up to 30 tons.

## Claims

1. A seamless rolled railway wheel 1 comprising a rim 2 and a hub 3 conjugated by curved transitional regions 4 with a disk 5 formed by outward 6 and inner 7 curved surfaces arranged in such a way, that said outward curved surface 6 of said disk 5 from the side of said rim 2 is formed by a first outward radius curvature R1, from the side of said hub 3 by a second outward radius curvature R2 with the curving coinciding with the curving direction of said first outward radius curvature R1, and conjugated between each other a third outward radius curvature R3 with the curving opposite to the curving direction of said first outward curvature R1 and said second outward curvature R2, the inner curved surface 7 of said disk 5 from the side of said rim 2 is formed by a first inner radius curvature R4, from the side of said hub 3 by a second inner radius curvature R5 with the curving coinciding with the curving direction of said first inner radius curvature R4, and conjugated with each other a third inner radius curvature R6 with the curving opposite to the curving direction of said first inner curvature R4 and said second inner curvature R5, **characterized in that** for said outward curved surface 6 radius of said first outward radius curvature R1 is from 0.09 to 0.14 of the rolling circle diameter, radius of said second outward radius curvature R2 is from 0.1 to 0.15 the rolling circle diameter, radius of said third outward radius curvature R3 is from 0.12 to 0.18 of the rolling circle diameter, and for said inner curved surface 7 radius of the first inner radius curvature R4 is from 0.12 to 0.18 of the rolling circle diameter, radius of said second radius curvature R5 is from 0.1 to 0.15 of the rolling circle diameter, radius of said third inner curvature R6 is from 0.12 to 0.17 of the rolling circle diameter.

## Patentansprüche

1. Nahtlos gewalztes Eisenbahnrad (1) mit einer Felge (2) und einer Nabe (3), die durch gekrümmte Übergangsbereiche (4) mit einer durch eine äußere (6) und eine innere (7) gekrümmte Oberfläche gebildete Scheibe (5) verbunden sind, welche derart angeordnet sind, dass die äußere gekrümmte Oberfläche (6) der Scheibe (5) auf der Seite der Felge (2) durch einen ersten äußeren Krümmungsradius R1 und auf der Seite der Nabe (3) durch einen zweiten äußeren Krümmungsradius R2 gebildet wird, wobei sich die Krümmung mit der Krümmungsrichtung des ersten äußeren Krümmungsradius R1 deckt und wobei zwischen den beiden ein dritter äußerer Krümmungsradius R3 verbunden ist, wobei die Krümmung entgegengesetzt zu der Krümmungsrichtung der ersten äußeren Krümmung R1 und der zweiten äußeren Krümmung R2 ist, wobei die innere gekrümmte Oberfläche (7) der Scheibe (5) auf der Seite der Felge (2) durch einen ersten inneren Krümmungsradius R4 und auf der Seite der Nabe (3) durch einen zweiten inneren Krümmungsradius R5 gebildet ist, wobei die Krümmung sich mit der Krümmungsrichtung des ersten inneren Krümmungsradius R4 deckt und wobei zwischen den beiden ein dritter innerer Krümmungsradius R6 verbunden ist, wobei die Krümmung entgegengesetzt zu der Krümmungsrichtung der ersten inneren Krümmung R4 und der zweiten inneren Krümmung R5 ist,
**dadurch gekennzeichnet, dass** bei der äußeren gekrümmten Oberfläche (6) ein Radius von dem ersten äußeren Krümmungsradius R1 zwischen 0,09 und 0,14 des rollenden Kreisdurchmessers liegt, ein Radius von dem zweiten äußeren Krümmungsradius R2 zwischen 0,1 und 0,15 des rollenden Kreisdurchmessers liegt, ein Radius des dritten äußeren Krümmungsradius R3 zwischen 0,12 und 0,18 des rollenden Kreisdurchmessers liegt, und wobei bei der inneren gekrümmten Oberfläche (7) ein Radius des ersten inneren Krümmungsradius R4 zwischen 0,12 und 0,18 des rollenden Kreisdurchmessers liegt, ein Radius des zweiten Krümmungsradius R5 zwischen 0,1 und 0,15 des rollenden Kreisdurchmessers liegt und ein Radius von der dritten inneren Krümmung R6 zwischen 0,12 und 0,17 des rollenden Kreisdurchmessers liegt.

## Revendications

1. Roue de chemin de fer (1) laminée sans soudure, comprenant une jante (2) et un moyeu (3) qui sont reliés au moyen de parties de raccordement courbées (4) à un disque (5) formé par une surface courbée extérieure (6) et intérieure (7) arrangées de sorte que la surface courbée extérieure (6) du disque (5) sur le côté de la jante (2) est formée par un premier rayon de courbure extérieur R1 et sur le côté du moyeu (3) par un second rayon de courbure extérieur R2, la courbure étant coïncidente avec la direction de courbure du premier rayon de courbure R1, et un troisième rayon de courbure R3 étant connecté entre lesdits rayons de courbure, la courbure étant opposée à la direction de courbure de la première courbure extérieure R1 et de la seconde courbure extérieure R2, la surface courbée intérieure (7) du disque (5) sur le côté de la jante (2) étant formée par un premier rayon de courbure intérieur R4 et sur le côté du moyeu (3) par an second rayon de courbure intérieur R5, la courbure étant coïncidente avec la direction de courbure du premier rayon de courbure intérieur R4, et un troisième rayon de courbure R6 étant connecté entre lesdits rayons de courbure, la courbure étant opposée à la direction de courbure de la première courbure intérieure R4 et la seconde courbure intérieure R5,
**caractérisée en ce que** dans la surface courbée extérieure (6) un rayon du premier rayon de courbure extérieur R1 est entre 0,09 et 0,14 du diamètre du cercle roulant, un rayon du second rayon de courbure extérieur R2 est entre 0,1 et 0,15 du diamètre du cercle roulant, un rayon du troisième rayon de courbure extérieur R3 est entre 0,12 et 0,18 du diamètre du cercle roulant, et **en ce que** dans la surface courbée intérieure (7) un rayon du premier rayon de courbure intérieur R4 est entre 0,12 et 0,18 du diamètre du cercle roulant, un rayon du second rayon de courbure R5 est entre 0,1 et 0,15 du diamètre du cercle roulant et un rayon de la troisième courbure intérieure R6 est entre 0,12 et 0,17 du diamètre du cercle roulant.
